# EUROPEAN PATENT SPECIFICATION

(11) **EP 3 659 822 B1**
(45) Date of publication and mention of the grant of the patent: **03.03.2021**
(21) Application number: 19207897.0
(22) Date of filing: 08.11.2019
(51) Int. Cl.: B60C 11/00, B60C 9/18

(54) **TIRE**
REIFEN
PNEUMATIQUE

(30) Priority: 13.11.2018 JP 2018213106; 07.11.2019 JP 2019201875
(43) Date of publication of application: 03.06.2020
(73) Proprietor: Sumitomo Rubber Industries, Ltd., Kobe-shi, Hyogo-ken 651-0072 (JP)
(72) Inventor: ISHIBASHI, Takashi, Kobe-shi, Hyogo 651-0072 (JP)
(74) Representative: Manitz Finsterwald Patent- und Rechtsanwaltspartnerschaft mbB

(56) References cited:
- EP-A2- 0 424 155
- EP-A2- 1 086 832

## Description

### TECHNICAL FIELD

The present invention relates to a tire in which a belt layer is disposed inside a tread portion.

### BACKGROUND ART

Conventionally, various types of tires in which a belt layer is disposed inside a tread portion and which are so suitable for high-speed running as to be used for car racing and the like, have been known. For example, Patent Literature 1 proposes a pneumatic tire which employs a folded ply structure obtained by folding back end portions in the tire axial direction of a belt layer and in which a tread portion has specific profiles, thereby allowing both steering stability and durability to be attained.

### CITATION LIST

### PATENT LITERATURE

[PTL 1] Japanese Laid-Open Patent Publication No. 2015-101256

EP 1 086 832 A2 discloses a tire comprising the features according to the preamble of claims 1, 6 and 8.

EP 0 424 155 A2 discloses a tire having features according to a related technology.

### DISCLOSURE OF THE INVENTION

### PROBLEMS TO BE SOLVED BY THE INVENTION

However, tires having a folded ply structure have lower steering stability than tires having a cut ply structure in which no end portion in the tire axial direction of a belt layer is folded back. Thus, further enhancement has been demanded in terms of attaining both steering stability and durability.

The present invention has been made in view of the aforementioned circumstance, and a main object of the present invention is to provide a tire that enables both steering stability and durability to be attained in a balanced manner.

### SOLUTION TO THE PROBLEMS

The present invention is a tire having a tread portion. The tread portion includes a pair of tread ends, a crown profile extending in a tire axial direction between the tread ends, and shoulder profiles each extending outward in the tire axial direction from the corresponding tread end. The crown profile is formed by a first circular arc having a first radius of curvature and located on a side where a tire equator is present, and second circular arcs each having a second radius of curvature and each located on a side where the corresponding tread end is present. Each shoulder profile is formed by a third circular arc having a single radius of curvature which is a third radius of curvature different from the second radius of curvature. A belt layer is disposed inside the tread portion. Each of belt ends located at outermost sides in the tire axial direction of the belt layer is located outward, in the tire axial direction, of the corresponding tread end and inward, in a tire radial direction, of the corresponding shoulder profile.

In the tire according to a first variation of the present invention, a distance in the tire axial direction between each belt end and the corresponding tread end is 5 to 20 mm.

In the tire according to the first variation of the present invention, it is preferable that the crown profile and each shoulder profile are connected to each other at a continuity point.

It is preferable that the second radius of curvature is smaller than the first radius of curvature.

It is preferable that the third radius of curvature is smaller than the second radius of curvature.

It is preferable that the first radius of curvature is 1000 to 2000 mm, the second radius of curvature is 200 to 400 mm, and the third radius of curvature is 20 to 40 mm.

In the tire according to a second variation of the present invention, it is preferable that the crown profile and each shoulder profile are connected to each other at a discontinuity point.

In the tire according to the second variation of the present invention, it is preferable that a center of the third circular arc is located outward, in the tire radial direction, of the shoulder profile.

In the tire according to a third variation of the present invention, the tread portion includes a pair of tread ends, a crown profile extending in a tire axial direction between the tread ends, and shoulder profiles each extending outward in the tire axial direction from the corresponding tread end. The crown profile is formed by a first circular arc having a first radius of curvature and located on a side where a tire equator is present, and second circular arcs each having a second radius of curvature and each located on a side where the corresponding tread end is present. Each shoulder profile is formed by a straight line. The crown profile and the shoulder profile are connected to each other at a discontinuity point. A belt layer is disposed inside the tread portion. Each of belt ends located at outermost sides in the tire axial direction of the belt layer is located outward, in the tire axial direction, of the corresponding tread end and inward, in a tire radial direction, of the corresponding shoulder profile.

In the tire according to the present invention, it is preferable that the discontinuity point is chamfered into a circular arc shape.

In the tire according to the present invention, it is preferable that a distance in the tire axial direction between each belt end and the corresponding tread end is 5 to 20 mm.

In the tire according to the present invention, it is preferable that the belt layer includes at least one belt ply and edge bands disposed on outer sides in the tire radial direction of the belt ply, and an edge inner end at an inner side in the tire axial direction of each edge band is located inward, in the tire axial direction, of the corresponding tread end.

In the tire according to the present invention, it is preferable that the crown profile has a first position at a center thereof in the tire axial direction and second positions at outer sides thereof in the tire axial direction, each shoulder profile has the corresponding second position and a third position which is present at an outer side in the tire radial direction relative to the corresponding belt end, and an angle of 10 to 30° is formed between a first straight line connecting the first position and the second position to each other and a second straight line connecting the second position and the third position to each other.

It is preferable that an angle θ1, with respect to the tire axial direction, of the first straight line connecting the first position and the second position to each other is 2 to 4°.

It is preferable that the belt layer includes at least one belt ply, and a portion, of the belt ply, that is located at each of outer sides in the tire axial direction relative to the corresponding tread end extends so as to be parallel to an imaginary extension line of the corresponding second circular arc of the crown profile.

It is preferable that the belt layer includes a first belt ply, a second belt ply disposed on an outer side in the tire radial direction of the first belt ply, and a third belt ply disposed on an outer side in the tire radial direction of the second belt ply, and a width in the tire axial direction of the second belt ply is smaller than a width in the tire axial direction of each of the first belt ply and the third belt ply.

### ADVANTAGEOUS EFFECT OF THE INVENTION

In the tire according to the present invention, the tread portion includes the pair of tread ends, the crown profile extending in the tire axial direction between the tread ends, and the shoulder profiles each extending outward in the tire axial direction from the corresponding tread end. The crown profile is formed by the first circular arc having the first radius of curvature and located on the side where the tire equator is present, and second circular arcs each having the second radius of curvature and each located on the side where the corresponding tread end is present. Each shoulder profile is formed by the straight line or the third circular arc having a single radius of curvature which is the third radius of curvature different from the second radius of curvature.

With such a tread portion, since the crown profile is formed by at least one circular arc, the ground contact area is large when load is applied to the tire, whereby the steering stability of the tire can be enhanced. In addition, with such a tread portion, since the inflection point between the second circular arc and the third circular arc is located at the tread end, the ground contact range of the tread portion is not excessively changed even when large load is applied to the tire, whereby the steering stability of the tire can be enhanced.

In the tire according to the present invention, the belt layer is disposed inside the tread portion, and each of the belt ends located at the outermost sides in the tire axial direction of the belt layer is located outward, in the tire axial direction, of the corresponding tread end and inward, in the tire radial direction, of the corresponding shoulder profile.

With such a belt layer, ground contact of the shoulder profile is suppressed even when large load is applied to the tire, whereby distortion of the belt end can be reduced. Accordingly, damage to the tread portion originating from the belt end is suppressed, whereby the durability of the tire can be enhanced. Therefore, the tire according to the present invention enables both favorable steering stability and durability to be attained in a balanced manner.

### BRIEF DESCRIPTION OF THE DRAWINGS

FIG. 1 is a cross-sectional view of a tire according to an embodiment of the present invention,
FIG. 2 is a view of profiles in the tire in FIG. 1,
FIG. 3 is a schematic front view of a vehicle mounted with the tire,
FIG. 4 is a view of profiles in a tire according to a second embodiment, and
FIG. 5 is a view of profiles in a tire according to a third embodiment.

### MODE FOR CARRYING OUT THE INVENTION

Hereinafter, an embodiment of the present invention will be described in detail with reference to the drawings.

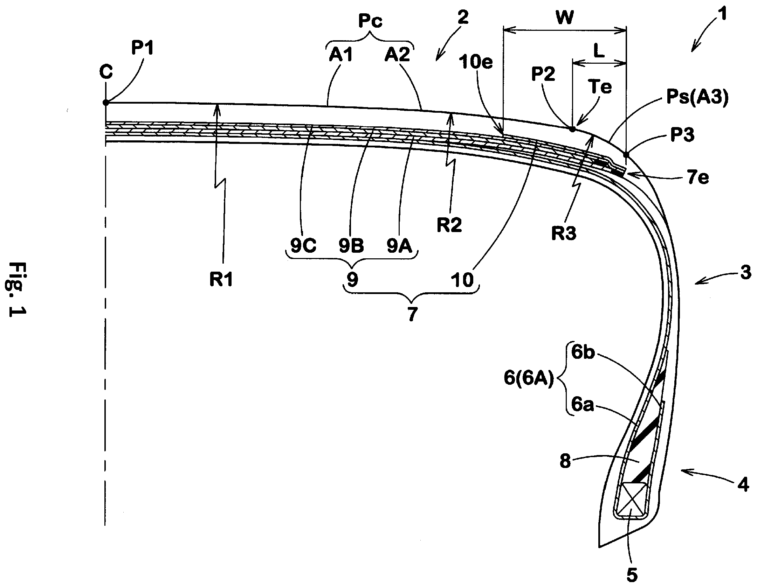

FIG. 1 is a tire meridian cross-sectional view of a tire 1 according to the present embodiment in a normal state. The tire 1 according to the present embodiment is suitably used as a low-profile pneumatic tire suitable for racing cars. However, the tire 1 is not limited in use to a pneumatic tire for racing cars, and may be used as, for example, a pneumatic tire for passenger cars or a heavy-duty tire.

Here, if the tire 1 is a pneumatic tire, the "normal state" refers to a state in which the tire 1 is mounted on a normal rim and is adjusted to have a normal internal pressure, and no load is applied to the tire 1. In the present specification, the dimension of each component of the tire 1 and the like are values measured in the normal state, unless otherwise specified.

The "normal rim" refers to a rim that is defined, in a standard system including a standard on which the tire 1 is based, by the standard for each tire, and is, for example, the "Standard Rim" in the JATMA standard, the "Design Rim" in the TRA standard, or the "Measuring Rim" in the ETRTO standard.

The "normal internal pressure" refers to an air pressure that is defined, in a standard system including a standard on which the tire 1 is based, by the standard for each tire, and is the "maximum air pressure" in the JATMA standard, the maximum value indicated in the table "TIRE LOAD LIMITS AT VARIOUS COLD INFLATION PRESSURES" in the TRA standard, or the "INFLATION PRESSURE" in the ETRTO standard.

As shown in FIG. 1, the tire 1 according to the present embodiment includes a carcass 6 extending from a tread portion 2 via sidewall portions 3 to bead cores 5 of bead portions 4, and a belt layer 7 disposed inside the tread portion 2 so as to be located outward, in the tire radial direction, of the carcass 6. In the tire 1, it is preferable that a ring-shaped bead core 5 is embedded in each bead portion 4. The bead portion 4 has, for example, a bead apex rubber 8 with a triangular cross-sectional shape extending outward in the tire radial direction from the bead core 5.

The tread portion 2 in the present embodiment includes a pair of tread ends Te (one of the tread ends Te is not shown), a crown profile Pc extending in the tire axial direction between the tread ends Te, and shoulder profiles Ps each extending outward in the tire axial direction from the corresponding tread end Te. Each of the crown profile Pc and the shoulder profiles Ps in the present embodiment indicates a profile in the tire 1 in the normal state.

Here, each "tread end Te" refers to the outermost ground contact position in the tire axial direction when a normal load is applied to the tire 1 in the normal state and the tire 1 is brought into contact with a flat ground surface at a camber angle of 0°. The center position in the tire axial direction between the pair of tread ends Te is a tire equator C.

The "normal load" refers to a load that is defined, in a standard system including a standard on which the tire 1 is based, by the standard for each tire, and is the "maximum load capacity" in the JATMA standard, the maximum value indicated in the table "TIRE LOAD LIMITS AT VARIOUS COLD INFLATION PRESSURES" in the TRA standard, or the "LOAD CAPACITY" in the ETRTO standard.

It is preferable that the crown profile Pc is formed by at least one circular arc. The crown profile Pc in the present embodiment is formed by a first circular arc A1 having a first radius of curvature R1 and located on a side where the tire equator C is present, and second circular arcs A2 each having a second radius of curvature R2 and each located on a side where the corresponding tread end Te is present. It is preferable that the second radius of curvature R2 is a radius different from the first radius of curvature R1. The second radius of curvature R2 in the present embodiment is smaller than the first radius of curvature R1.

With such a tread portion 2, since the crown profile Pc is formed by at least one circular arc, the ground contact area is large when load is applied to the tire 1, whereby the steering stability of the tire 1 can be enhanced.

Each shoulder profile Ps in the present embodiment is formed by a third circular arc A3 having a single radius of curvature which is a third radius of curvature R3. It is preferable that the third radius of curvature R3 is a radius different from each of the first radius of curvature R1 and the second radius of curvature R2. The third radius of curvature R3 in the present embodiment is smaller than the second radius of curvature R2.

With such a tread portion 2, since the inflection point between the second circular arc A2 and the third circular arc A3 is located at the tread end Te, the ground contact range of the tread portion 2 is not excessively changed even when large load is applied to the tire 1, whereby the steering stability of the tire 1 can be more enhanced.

Each of belt ends 7e located at the outermost sides in the tire axial direction of the belt layer 7 in the present embodiment is located outward, in the tire axial direction, of the corresponding tread end Te and inward, in the tire radial direction, of the corresponding shoulder profile Ps.

With such a belt layer 7, ground contact of the shoulder profile Ps is suppressed even when large load is applied to the tire 1, whereby distortion of the belt end 7e can be reduced. Accordingly, damage to the tread portion 2 originating from the belt end 7e is suppressed, whereby the durability of the tire 1 can be enhanced. Therefore, the tire 1 according to the present embodiment enables both favorable steering stability and durability to be attained in a balanced manner.

In a more preferable mode, the carcass 6 is formed by at least one carcass ply (in the present embodiment, one carcass ply 6A). The carcass ply 6A includes a body portion 6a extending between the pair of bead cores 5 (one of the bead cores 5 is not shown) so as to form a toroidal shape, and folded-back portions 6b which are contiguous with both sides of the body portion 6a and folded back around the bead cores 5 from the inner side to the outer side in the tire axial direction.

The carcass ply 6A includes, for example, a carcass cord tilted with respect to the tire equator C at an angle of 75 to 90°. As the carcass cord, for example, an organic fiber cord or a steel cord is used.

The belt layer 7 includes at least one belt ply (in the present embodiment, three belt plies 9), and edge bands 10 disposed on the outer sides in the tire radial direction of the belt plies 9. It is preferable that the belt plies 9 have a cut ply structure in which no end portion in the tire axial direction of the belt layer 7 is folded back.

The belt plies 9 include, for example, a first belt ply 9A disposed closest to the carcass 6, a second belt ply 9B disposed on the outer side in the tire radial direction of the first belt ply 9A, and a third belt ply 9C disposed on the outer side in the tire radial direction of the second belt ply 9B. Such belt plies 9 maintain the rigidity of the tread portion 2 even when large load is applied to the tire 1, whereby the steering stability of the tire 1 can be enhanced.

In the present embodiment, the width in the tire axial direction of the second belt ply 9B is smaller than the width in the tire axial direction of each of the first belt ply 9A and the third belt ply 9C. It is preferable that the outer ends in the tire axial direction of the second belt ply 9B are located outward, in the tire axial direction, of the tread ends Te. With such a belt layer 7, since the outer ends of all the belt plies 9 are located outward, in the tire axial direction, of the tread ends Te, damage to each belt ply 9 originating from either of the outer ends is suppressed, whereby the durability of the tire 1 can be enhanced.

It is preferable that a portion, of each belt ply 9, that is located at each of the outer sides in the tire axial direction relative to the corresponding tread end Te extends so as to be substantially parallel to an imaginary extension line of the corresponding second circular arc A2 of the crown profile Pc. Such a belt layer 7 allows reduction of distortion at the outer ends of the belt ply 9, whereby the durability of the tire 1 can be enhanced.

The distance L in the tire axial direction between each belt end 7e and the corresponding tread end Te is preferably 5 to 20 mm. If the distance L is shorter than 5 mm, it becomes difficult for the outer ends of all the belt plies 9 to be located outward, in the tire axial direction, of the tread ends Te, and the durability of the tire 1 may not be enhanced. Meanwhile, if the distance L is longer than 20 mm, the shoulder profile Ps becomes a large circular arc, and the steering stability of the tire 1 may not be enhanced.

It is preferable that an edge inner end 10e at the inner side in the tire axial direction of each edge band 10 is located inward, in the tire axial direction, of the corresponding tread end Te. With such an edge band 10, since the edge inner end 10e is apart from the inflection point between the crown profile Pc and the corresponding shoulder profile Ps at which stress is concentrated, damage originating from the edge inner end 10e is suppressed, whereby the durability of the tire 1 can be enhanced.

The width W in the tire axial direction of the edge band 10 is preferably 20 to 40 mm. If the width W is smaller than 20 mm, the edge inner end 10e and the tread end Te become close to each other, and the durability of the tire 1 may not be enhanced. Meanwhile, if the width W is larger than 40 mm, the weight of the tire 1 is increased, and the steering stability of the tire 1 may not be enhanced.

The first radius of curvature R1 of the first circular arc A1 is preferably 1000 to 2000 mm. The second radius of curvature R2 of the second circular arc A2 is preferably 200 to 400 mm. The third radius of curvature R3 of the third circular arc A3 is preferably 20 to 40 mm. Such a tread portion 2 is suitable for attaining both the steering stability and the durability of the tire 1.

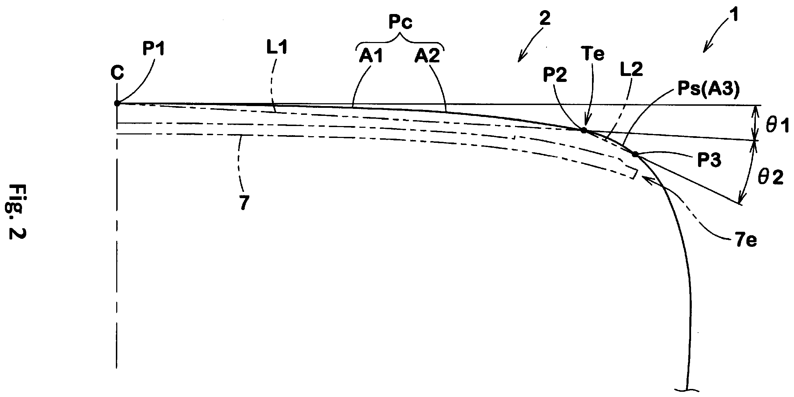

FIG. 2 is a view of the profiles in the tire 1 in FIG. 1. As shown in FIG. 2, in the tire 1 according to the present embodiment, the crown profile Pc and each shoulder profile Ps are connected to each other at a continuity point. Here, the "continuity point" refers to a point at which the second circular arc A2 of the crown profile Pc and the third circular arc A3 of the shoulder profile Ps share a tangent line.

The crown profile Pc has, for example, a first position P1 at the center thereof in the tire axial direction and second positions P2 at the outer sides thereof in the tire axial direction. The first position P1 in the present embodiment is the point of intersection between the first circular arc A1 and the tire equator C. Each second position P2 in the present embodiment is the point of intersection between the second circular arc A2 and the tread end Te, and the above-described continuity point.

The shoulder profile Ps has, for example, the second position P2 at the inner side thereof in the tire axial direction and a third position P3 at the outer side thereof in the tire axial direction. The third position P3 in the present embodiment is present on the third circular arc A3 and at the outer side in the tire radial direction relative to the belt end 7e. The shoulder profile Ps may extend outward, in the tire axial direction, of the third position P3.

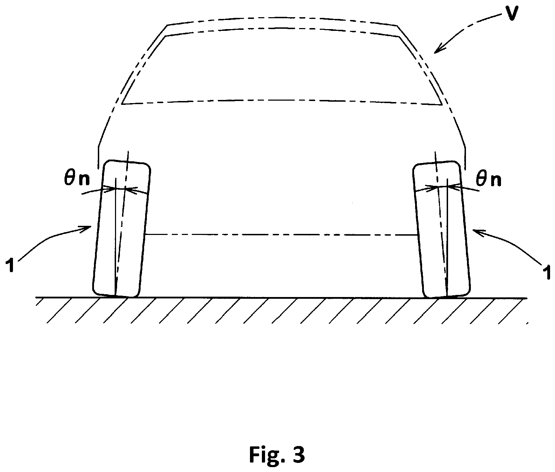

For the crown profile Pc, a first straight line L1 connecting the first position P1 and the second position P2 to each other can be drawn. It is preferable that the angle θ1 of the first straight line L1 with respect to the tire axial direction is larger than a negative camber angle θn (shown in FIG. 3) described later. The angle θ1 is preferably not smaller than 2°. Such a crown profile Pc allows reduction of distortion of the belt ends 7e even when tires 1 are mounted to a vehicle V (shown in FIG. 3) at large negative camber angles θn, whereby the durability of each tire 1 can be enhanced.

For the shoulder profile Ps, a second straight line L2 connecting the second position P2 and the third position P3 to each other can be drawn. An angle θ2 of 10 to 30° is preferably formed between the first straight line L1 and the second straight line L2. If the angle θ2 is smaller than 10°, the ground contact range of the tread portion 2 is excessively changed when large load is applied to the tire 1, and the steering stability of the tire 1 may not be enhanced. Meanwhile, if the angle θ2 is larger than 30°, the distance L in the tire axial direction between the belt end 7e and the tread end Te becomes small, and the durability of the tire 1 may not be enhanced.

FIG. 3 is a schematic front view of the vehicle V mounted with the tires 1. The vehicle V is, for example, a racing car. As shown in FIG. 3, each tire 1 is mounted to the vehicle V at a negative camber angle θn. Such a tire 1 can exhibit excellent steering stability even when the vehicle V runs at high speed.

The negative camber angle θn in the vehicle V is preferably not smaller than 2°. When such a vehicle V turns around a corner at high speed, the ground contact areas of the tires 1 increase, and excellent grip performance can be exhibited.

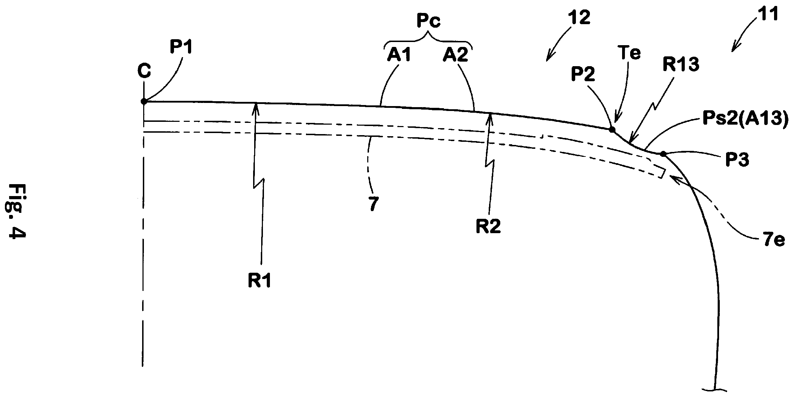

FIG. 4 is a view of profiles in a tire 11 according to a second embodiment. The same components as those in the above-described embodiment are denoted by the same reference characters, and the description thereof will be omitted. As shown in FIG. 4, a tread portion 12 of the tire 11 according to the present embodiment includes the crown profile Pc extending in the tire axial direction between the pair of tread ends Te, and shoulder profiles Ps2 each extending outward in the tire axial direction from the corresponding tread end Te.

Each shoulder profile Ps2 in the present embodiment is formed by a third circular arc A13 having a single radius of curvature which is a third radius of curvature R13 different from the second radius of curvature R2. The center of the third circular arc A13 in the present embodiment is located outward, in the tire radial direction, of the shoulder profile Ps2. There is no fear that such a shoulder profile Ps2 contacts the ground even when large load is applied to the tire 11, whereby distortion of the belt end 7e can be reduced, and the durability of the tire 11 can be enhanced.

In the tire 11 according to the present embodiment, the crown profile Pc and the shoulder profile Ps2 are connected to each other at a discontinuity point. Here, the "discontinuity point" refers to a point at which the second circular arc A2 of the crown profile Pc and the third circular arc A13 of the shoulder profile Ps2 are connected to each other without sharing any tangent line. With such a tread portion 12, there is no fear for a change of the ground contact range of the tread portion 12 even when large load is applied to the tire 11, whereby the steering stability of the tire 11 can be enhanced.

The discontinuity point is preferably chamfered into a circular arc shape having a radius of curvature not larger than 10 mm. With such a tread portion 12, damage originating from the discontinuity point is suppressed, whereby the durability of the tire 11 can be enhanced. Therefore, the tire 11 according to the second embodiment enables both favorable steering stability and durability to be attained at a high level.

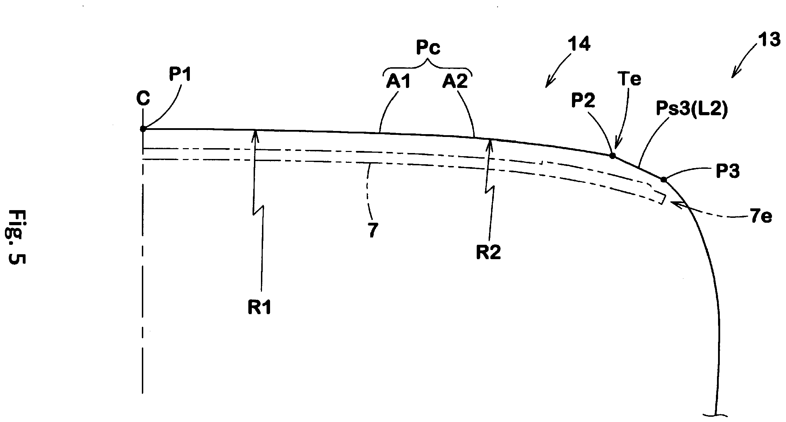

FIG. 5 is a view of profiles in a tire 13 according to a third embodiment. The same components as those in the above-described embodiments are denoted by the same reference characters, and the description thereof will be omitted. As shown in FIG. 5, a tread portion 14 of the tire 13 according to the present embodiment includes the crown profile Pc extending in the tire axial direction between the pair of tread ends Te, and shoulder profiles Ps3 each extending outward in the tire axial direction from the corresponding tread end Te.

Each shoulder profile Ps3 in the present embodiment is formed by a straight line. Therefore, the shoulder profile Ps3 in the present embodiment is identical to the second straight line L2 (shown in FIG. 2). There is no fear that such a shoulder profile Ps3 contacts the ground even when large load is applied to the tire 13, whereby distortion of the belt end 7e is reduced, and the durability of the tire 1 can be enhanced.

As in the second embodiment, the crown profile Pc and the shoulder profile Ps3 are connected to each other at a discontinuity point in the tire 13 according to the present embodiment. With such a tread portion 14, there is no fear for a change of the ground contact range of the tread portion 14 even when large load is applied to the tire 13, whereby the steering stability of the tire 13 can be enhanced.

As in the second embodiment, the discontinuity point is preferably chamfered into a circular arc shape having a radius of curvature not larger than 10 mm. With such a tread portion 14, damage originating from the discontinuity point is suppressed, whereby the durability of the tire 13 can be enhanced. Therefore, the tire 13 according to the third embodiment enables both favorable steering stability and durability to be attained at a high level.

Although the preferred embodiments of the present invention have been described in detail above, the present invention is not limited to the above-described embodiments, and various modifications can be made within the scope of the appended claims.

### [EXAMPLES]

Pneumatic tires for racing having the basic structure in FIG. 1 and the profiles in FIG. 2, FIG. 4 and FIG. 5 were produced as test tires of Examples based on the specifications in Table 1 and Table 2. In addition, pneumatic tires for racing in each of which the belt ends were located inward, in the tire radial direction, of the tread ends were produced as test tires of Comparative Examples based on the specifications in Table 1. The steering stability and the durability of each of these test tires of the Examples and the Comparative Examples were evaluated. The specifications common to the test tires, and test methods, are as follows.

### <Common Specifications>

Tire size: 290/680R18
Rim size: 18×11.0J
Air pressure: 200 kPa
First radius of curvature: 1500 mm
Second radius of curvature: 300 mm
Third radius of curvature: 30 mm (excluding Example 15 and Example 16)

### <Steering Stability>

The test tires were mounted to all wheels of a rear-wheel-drive car with an engine displacement of 3.5 liters at a negative camber angle of 3°, one test driver got on and drove the car on a dry paved course, and the test driver made sensory evaluation for the responsiveness of the car to the steering during the running. Each result is indicated as an index, with the result of Comparative Example 1 being regarded as 100. A larger numeric value indicates better steering stability.

### <Durability>

Each test tire was placed on a drum tester at a negative camber angle of 3°, and running was performed at a speed of 200 km/h while a vertical load of 7 kN was being applied to the test tire. Then, the running time taken before the tire was broken during the running was measured. Each result is indicated as an index, with the result of Comparative Example 1 being regarded as 100. A larger numeric value indicates better durability.

The results of the tests are indicated in Table 1 and Table 2.

**[Table 1]**

| | Comparative Example 1 | Example 1 | Example 2 | Example 3 | Example 4 | Example 5 | Example 6 | Example 7 | Example 8 |
|---|---|---|---|---|---|---|---|---|---|
| Shape of shoulder profile | FIG. 2 | FIG. 2 | FIG. 2 | FIG. 2 | FIG. 2 | FIG. 2 | FIG. 2 | FIG. 2 | FIG. 2 |
| Distance L between belt end and tread end (mm) | 0 | 5 | 20 | 25 | 5 | 5 | 5 | 5 | 5 |
| Angle θ1 of first straight line (°) | 3 | 3 | 3 | 3 | 1 | 2 | 4 | 3 | 3 |
| Angle θ2 between first straight line and second straight line (°) | 10 | 10 | 10 | 10 | 10 | 10 | 10 | 5 | 30 |
| Width W of edge band (mm) | 30 | 30 | 30 | 30 | 30 | 30 | 30 | 30 | 30 |
| Chamfering at discontinuity point | - | - | - | - | - | - | - | - | - |
| Steering stability (index) | 100 | 100 | 98 | 95 | 105 | 102 | 100 | 100 | 100 |
| Durability (index) | 100 | 110 | 115 | 110 | 98 | 105 | 110 | 105 | 110 |

**[Table 2]**

| | Example 9 | Example 10 | Example 11 | Example 12 | Example 13 | Example 14 | Example 15 | Example 16 |
|---|---|---|---|---|---|---|---|---|
| Shape of shoulder profile | FIG. 2 | FIG. 2 | FIG. 2 | FIG. 2 | FIG. 4 | FIG. 4 | FIG. 5 | FIG. 5 |
| Distance L between belt end and tread end (mm) | 5 | 5 | 5 | 5 | 5 | 5 | 5 | 5 |
| Angle θ1 of first straight line (°) | 3 | 3 | 3 | 3 | 3 | 3 | 3 | 3 |
| Angle θ2 between first straight line and second straight line (°) | 40 | 10 | 10 | 10 | 10 | 10 | 10 | 10 |
| Width W of edge band (mm) | 30 | 0 | 10 | 45 | 30 | 30 | 30 | 30 |
| Chamfering at discontinuity point | - | - | - | - | Not chamfered | Chamfered | Not chamfered | Chamfered |
| Steering stability (index) | 100 | 100 | 100 | 98 | 100 | 100 | 100 | 100 |
| Durability (index) | 102 | 102 | 105 | 110 | 112 | 115 | 112 | 115 |

As a result of the tests, it has been confirmed that the tire of each Example allows both steering stability and durability to be attained in a balanced manner unlike the Comparative Example.

### DESCRIPTION OF THE REFERENCE CHARACTERS

- 1: tire
- 2: tread portion
- 7: belt layer
- 7e: belt end
- Pc: crown profile
- Ps: shoulder profile
- A1: first circular arc
- A2: second circular arc
- A3: third circular arc

## Claims

1. A tire (1) comprising a tread portion (2), wherein
the tread portion (2) includes a pair of tread ends (Te), a crown profile (Pc) extending in a tire axial direction between the tread ends (Te), and shoulder profiles (Ps) each extending outward in the tire axial direction from the corresponding tread end (Te),
the tread end (Te) refers to the outermost ground contact position in the tire axial direction when a normal load is applied to the tire 1 in the normal state and the tire (1) is brought into contact with a flat ground surface at a camber angle of 0°,
the crown profile (Pc) is formed by a first circular arc (A1) having a first radius of curvature (R1) and located on a side where a tire equator (C) is present, and second circular arcs (A2) each having a second radius of curvature (R2) and each located on a side where the corresponding tread end (Te) is present,
each shoulder profile (Ps) is formed by a third circular arc (A3) having a single radius of curvature which is a third radius of curvature (R3) different from the second radius of curvature (R2),
a belt layer (7) is disposed inside the tread portion (2), and
each of belt ends (7e) located at outermost sides in the tire axial direction of the belt layer (7) is located outward, in the tire axial direction, of the corresponding tread end (Te) and inward, in a tire radial direction, of the corresponding shoulder profile (Ps),
**characterized in that**
a distance (L) in the tire axial direction between each belt end (7e) and the corresponding tread end (Te) is 5 to 20 mm.

2. The tire (1) according to claim 1, wherein the crown profile (Pc) and each shoulder profile (Ps) are connected to each other at a continuity point.

3. The tire (1) according to claim 1 or 2, wherein the second radius of curvature (R2) is smaller than the first radius of curvature (R1).

4. The tire (1) according to claim 3, wherein the third radius of curvature (R3) is smaller than the second radius of curvature (R2).

5. The tire (1) according to any one of claims 1 to 4, wherein
the first radius of curvature (R1) is 1000 to 2000 mm,
the second radius of curvature (R2) is 200 to 400 mm, and
the third radius of curvature (R3) is 20 to 40 mm.

6. A tire (1) according to the preamble of claim 1,
**characterized in that**
the crown profile (Pc) and each shoulder profile (Ps) are connected to each other at a discontinuity point.

7. The tire (1) according to claim 6, wherein a center of the third circular arc (A3) is located outward, in the tire radial direction, of the shoulder profile (Ps).

8. A tire (1) comprising a tread portion (2), wherein
the tread portion (2) includes a pair of tread ends (Te), a crown profile (Pc) extending in a tire axial direction between the tread ends (Te), and shoulder profiles (Ps) each extending outward in the tire axial direction from the corresponding tread end (Te),
the tread end (Te) refers to the outermost ground contact position in the tire axial direction when a normal load is applied to the tire 1 in the normal state and the tire (1) is brought into contact with a flat ground surface at a camber angle of 0°,
the crown profile (Pc) is formed by a first circular arc (A1) having a first radius of curvature (R1) and located on a side where a tire equator is present, and second circular arcs (A2) each having a second radius of curvature (R2) and each located on a side where the corresponding tread end (Te) is present,
a belt layer (7) is disposed inside the tread portion (2), and
each of belt ends (7e) located at outermost sides in the tire axial direction of the belt layer (7) is located outward, in the tire axial direction, of the corresponding tread end (Te) and inward, in a tire radial direction, of the corresponding shoulder profile (Ps),
**characterized in that**
each shoulder profile (Ps) is formed by a straight line, and
the crown profile (Pc) and the shoulder profile (Ps) are connected to each other at a discontinuity point.

9. The tire (1) according to any one of claims 6 to 8, wherein the discontinuity point is chamfered into a circular arc shape.

10. The tire (1) according to any one of claims 6 to 9, wherein a distance (L) in the tire axial direction between each belt end (7e) and the corresponding tread end (Te) is 5 to 20 mm.

11. The tire (1) according to any one of claims 1 to 10, wherein
the belt layer (7) includes at least one belt ply (9) and edge bands (10) disposed on outer sides in the tire radial direction of the belt ply (9), and
an edge inner end (10e) at an inner side in the tire axial direction of each edge band (10) is located inward, in the tire axial direction, of the corresponding tread end (Te).

12. The tire (1) according to any one of claims 1 to 11, wherein
the crown profile (Pc) has a first position (P1) at a center thereof in the tire axial direction and second positions (P2) at outer sides thereof in the tire axial direction,
each shoulder profile (Ps) has the corresponding second position (P2) and a third position (P3) which is present at an outer side in the tire radial direction relative to the corresponding belt end (7e), and
an angle (θ2) of 10 to 30° is formed between a first straight line (L1) connecting the first position (P1) and the second position (P2) to each other and a second straight line (L2) connecting the second position (P2) and the third position (P3) to each other.

13. The tire (1) according to claim 12, wherein an angle (θ1), with respect to the tire axial direction, of the first straight line (L1) connecting the first position (P1) and the second position (P2) to each other is 2 to 4°.

14. The tire (1) according to any one of claims 1 to 13, wherein
the belt layer (7) includes at least one belt ply (9), and
a portion, of the belt ply (9), that is located at each of outer sides in the tire axial direction relative to the corresponding tread end (Te) extends so as to be parallel to an imaginary extension line of the corresponding second circular arc (A2) of the crown profile (Pc).

15. The tire (1) according to any one of claims 1 to 14, wherein
the belt layer (7) includes a first belt ply (9A), a second belt ply (9B) disposed on an outer side in the tire radial direction of the first belt ply (9A), and a third belt ply (9C) disposed on an outer side in the tire radial direction of the second belt ply (9B), and
a width in the tire axial direction of the second belt ply (9B) is smaller than a width in the tire axial direction of each of the first belt ply (9A) and the third belt ply (9C).

## Patentansprüche

1. Reifen (1), der einen Laufflächenabschnitt (2) umfasst, wobei
der Laufflächenabschnitt (2) ein Paar von Laufflächenenden (Te), ein Kronenprofil (Pc), das sich in einer Reifenaxialrichtung zwischen den Laufflächenenden (Te) erstreckt, und Schulterprofile (Ps) aufweist, die sich jeweils von dem entsprechenden Laufflächenende (Te) in der Reifenaxialrichtung nach außen erstrecken,
sich das Laufflächenende (Te) auf die äußerste Bodenkontaktposition in der Reifenaxialrichtung bezieht, wenn eine Normallast auf den Reifen (1) in dem Normalzustand ausgeübt wird und der Reifen (1) mit einer flachen Bodenfläche unter einem Sturzwinkel von 0° in Kontakt gebracht wird,
das Kronenprofil (Pc) durch einen ersten kreisförmigen Bogen (A1), der einen ersten Krümmungsradius (R1) aufweist und auf einer Seite angeordnet ist, auf welcher sich ein Reifenäquator (C) befindet, sowie durch zweite kreisförmige Bögen (A2) gebildet ist, die jeweils einen zweiten Krümmungsradius (R2) aufweisen und jeweils auf einer Seite angeordnet sind, auf der sich das entsprechende Laufflächenende (Te) befindet,
jedes Schulterprofil (Ps) durch einen dritten kreisförmigen Bogen (A3) gebildet ist, der einen einzigen Krümmungsradius aufweist, welcher ein dritter Krümmungsradius (R3) ist, der sich von dem zweiten Krümmungsradius (R2) unterscheidet,
eine Gürtellage (7) innerhalb des Laufflächenabschnitts (2) angeordnet ist und
jedes von Gürtelenden (7e), die an den äußersten Seiten der Gürtellage (7) in der Reifenaxialrichtung angeordnet sind, in der Reifenaxialrichtung außerhalb des entsprechenden Laufflächenendes (Te) und in einer Reifenradialrichtung innerhalb des entsprechenden Schulterprofils (Ps) angeordnet ist,
**dadurch gekennzeichnet, dass**
eine Distanz (L) in der Reifenaxialrichtung zwischen jedem Gürtelende (7e) und dem entsprechenden Laufflächenende (Te) 5 bis 20 mm beträgt.

2. Reifen (1) nach Anspruch 1, wobei das Kronenprofil (Pc) und jedes Schulterprofil (Ps) an einem Kontinuitätspunkt miteinander verbunden sind.

3. Reifen (1) nach Anspruch 1 oder 2, wobei der zweite Krümmungsradius (R2) kleiner als der erste Krümmungsradius (R1) ist.

4. Reifen (1) nach Anspruch 3, wobei der dritte Krümmungsradius (R3) kleiner als der zweite Krümmungsradius (R2) ist.

5. Reifen (1) nach einem der Ansprüche 1 bis 4, wobei
der erste Krümmungsradius (R1) 1000 bis 2000 mm beträgt,
der zweite Krümmungsradius (R2) 200 bis 400 mm beträgt und
der dritte Krümmungsradius (R3) 20 bis 40 mm beträgt.

6. Reifen (1) nach dem Oberbegriff des Anspruchs 1,
**dadurch gekennzeichnet, dass**
das Kronenprofil (Pc) und jedes Schulterprofil (Ps) an einem Diskontinuitätspunkt miteinander verbunden sind.

7. Reifen (1) nach Anspruch 6, wobei ein Zentrum des dritten kreisförmigen Bogens (A3) in der Reifenradialrichtung außerhalb des Schulterprofils (Ps) angeordnet ist.

8. Reifen (1), der einen Laufflächenabschnitt (2) umfasst, wobei
der Laufflächenabschnitt (2) ein Paar von Laufflächenenden (Te), ein Kronenprofil (Pc), das sich in einer Reifenaxialrichtung zwischen den Laufflächenenden (Te) erstreckt, und Schulterprofile (Ps) aufweist, die sich jeweils von dem entsprechenden Laufflächenende (Te) in der Reifenaxialrichtung nach außen erstrecken,
sich das Laufflächenende (Te) auf die äußerste Bodenkontaktposition in der Reifenaxialrichtung bezieht, wenn eine Normallast auf den Reifen (1) in dem Normalzustand ausgeübt wird und der Reifen (1) mit einer flachen Bodenfläche unter einem Sturzwinkel von 0° in Kontakt gebracht wird,
das Kronenprofil (Pc) durch einen ersten kreisförmigen Bogen (A1), der einen ersten Krümmungsradius (R1) aufweist und auf einer Seite angeordnet ist, auf welcher sich ein Reifenäquator befindet, sowie durch zweite kreisförmige Bögen (A2) gebildet ist, die jeweils einen zweiten Krümmungsradius (R2) aufweisen und jeweils auf einer Seite angeordnet sind, auf der sich das entsprechende Laufflächenende (Te) befindet,
eine Gürtellage (7) innerhalb des Laufflächenabschnitts (2) angeordnet ist und
jedes von Gürtelenden (7e), die an den äußersten Seiten der Gürtellage (7) in der Reifenaxialrichtung angeordnet sind, in der Reifenaxialrichtung außerhalb des entsprechenden Laufflächenendes (Te) und in einer Reifenradialrichtung innerhalb des entsprechenden Schulterprofils (Ps) angeordnet ist, dad
urch gekennzeichnet, dass
jedes Schulterprofil (Ps) durch eine gerade Linie gebildet ist und
das Kronenprofil (Pc) und das Schulterprofil (Ps) an einem Diskontinuitätspunkt miteinander verbunden sind.

9. Reifen (1) nach einem der Ansprüche 6 bis 8, wobei der Diskontinuitätspunkt in eine kreisförmige Bogenform abgeschrägt ist.

10. Reifen (1) nach einem der Ansprüche 6 bis 9, wobei eine Distanz (L) in der Reifenaxialrichtung zwischen jedem Gürtelende (7e) und dem entsprechenden Laufflächenende (Te) 5 bis 20 mm beträgt.

11. Reifen (1) nach einem der Ansprüche 1 bis 10, wobei
die Gürtellage (7) zumindest eine Gürtelschicht (9) und Randbänder (10) aufweist, die in der Reifenradialrichtung an Außenseiten der Gürtelschicht (9) angeordnet sind, und
ein inneres Randende (10e) in der Reifenaxialrichtung an einer Innenseite jedes Randbandes (10) in der Reifenaxialrichtung innerhalb des entsprechenden Laufflächenendes (Te) angeordnet ist.

12. Reifen (1) nach einem der Ansprüche 1 bis 11, wobei
das Kronenprofil (Pc) eine erste Position (P1) an einem Zentrum von diesem in der Reifenaxialrichtung und zweite Positionen (P2) an Außenseiten von diesem in der Reifenaxialrichtung aufweist,
jedes Schulterprofil (Ps) die entsprechende zweite Position (P2) und eine dritte Position (P3) aufweist, die in der Reifenradialrichtung relativ zu dem entsprechenden Gürtelende (7e) an einer Außenseite vorhanden ist, und
ein Winkel (θ2) von 10 bis 30° zwischen einer ersten geraden Linie (L1), welche die erste Position (P1) und die zweite Position (P2) miteinander verbindet, und einer zweiten geraden Linie (L2), welche die zweite Position (P2) und die dritte Position (P3) miteinander verbindet, gebildet ist.

13. Reifen (1) nach Anspruch 12, wobei ein Winkel (θ1) der ersten geraden Linie (L1), welche die erste Position (P1) und die zweite Position (P2) miteinander verbindet, bezogen auf die Reifenaxialrichtung 2 bis 4° beträgt.

14. Reifen (1) nach einem der Ansprüche 1 bis 13, wobei
die Gürtellage (7) zumindest eine Gürtelschicht (9) aufweist und
sich ein Abschnitt der Gürtelschicht (9), welcher an jeder von Außenseiten in der Reifenaxialrichtung relativ zu dem entsprechenden Laufflächenende (Te) angeordnet ist, derart erstreckt, dass er parallel zu einer imaginären Verlängerungslinie des entsprechenden zweiten kreisförmigen Bogens (A2) des Kronenprofils (Pc) verläuft.

15. Reifen (1) nach einem der Ansprüche 1 bis 14, wobei
die Gürtellage (7) eine erste Gürtelschicht (9A), eine zweite Gürtelschicht (9B), die in der Reifenradialrichtung auf einer Außenseite der ersten Gürtelschicht (9A) angeordnet ist, und eine dritte Gürtelschicht (9C) aufweist, die in der Reifenradialrichtung auf einer Außenseite der zweiten Gürtelschicht (9B) angeordnet ist, und
eine Breite der zweiten Gürtelschicht (9B) in der Reifenaxialrichtung kleiner als eine Breite jeder von der ersten Gürtelschicht (9A) und der dritten Gürtelschicht (9C) in der Reifenaxialrichtung ist.

## Revendications

1. Pneumatique (1) comprenant une portion formant bande de roulement (2), dans lequel
la portion formant bande de roulement (2) inclut une paire d'extrémités de bande de roulement (Te), un profil de couronne (Pc) s'étendant dans une direction axiale du pneumatique entre les extrémités de bande de roulement (Te), et des profils d'épaulement (Ps) s'étendant chacun vers l'extérieur dans la direction axiale du pneumatique depuis l'extrémité de bande de roulement correspondante (Te),
l'extrémité de bande de roulement (Te) se réfère à la position de contact au sol la plus à l'extérieur dans la direction axiale du pneumatique quand une charge normale est appliquée au pneumatique (1) dans l'état normal et que le pneumatique (1) est amené en contact avec une surface de sol plane sous un angle de cambrure de 0°,
le profil de couronne (Pc) est formé par un premier arc circulaire (A1) ayant un premier rayon de courbure (R1) et situé sur un côté où un équateur de pneumatique (C) est présent, et des deuxièmes arcs circulaires (A2) ayant chacun un deuxième rayon de courbure (R2) et situés chacun sur un côté où l'extrémité de bande de roulement correspondante (Te) est présente,
chaque profil d'épaulement (Ps) est formé par un troisième arc circulaire (A3) ayant un unique rayon de courbure qui est un troisième rayon de courbure (R3) différent du deuxième rayon de courbure (R2),
une couche de ceinture (7) est disposée à l'intérieur de la portion formant bande de roulement (2), et
chacune des extrémités de ceinture (7e) situées au niveau de côtés les plus à l'extérieur dans la direction axiale du pneumatique de la couche de ceinture (7) est située à l'extérieur, dans la direction axiale du pneumatique, de l'extrémité de bande de roulement correspondante (Te) et à l'intérieur, dans une direction radiale du pneumatique, du profil d'épaulement correspondant (Ps),
**caractérisé en ce que**
une distance (L) dans la direction axiale du pneumatique entre chaque extrémité de ceinture (7e) et l'extrémité de bande de roulement correspondante (Te) est de 5 à 20 mm.

2. Pneumatique (1) selon la revendication 1, dans lequel le profil de couronne (Pc) et chaque profil d'épaulement (Ps) sont connectés l'un à l'autre au niveau d'un point de continuité.

3. Pneumatique (1) selon la revendication 1 ou 2, dans lequel le deuxième rayon de courbure (R2) est plus petit que le premier rayon de courbure (R1).

4. Pneumatique (1) selon la revendication 3, dans lequel le troisième rayon de courbure (R3) est plus petit que le deuxième rayon de courbure (R2).

5. Pneumatique (1) selon l'une quelconque des revendications 1 à 4, dans lequel
le premier rayon de courbure (R1) est de 1 000 à 2 000 mm,
le deuxième rayon de courbure (R2) est de 200 à 400 mm, et
le troisième rayon de courbure (R3) est de 20 à 40 mm.

6. Pneumatique (1) selon le préambule de la revendication 1,
**caractérisé en ce que**
le profil de couronne (Pc) et chaque profil d'épaulement (Ps) sont connectés l'un à l'autre au niveau d'un point de discontinuité.

7. Pneumatique (1) selon la revendication 6, dans lequel un centre du troisième arc circulaire (A3) est situé à l'extérieur, dans la direction radiale du pneumatique, du profil d'épaulement (Ps).

8. Pneumatique (1) comprenant une portion formant bande de roulement (2), dans lequel
la portion formant bande de roulement (2) inclut une paire d'extrémités de bande de roulement (Te), un profil de couronne (Pc) s'étendant dans une direction axiale du pneumatique entre les extrémités de bande de roulement (Te), et des profils d'épaulement (Ps) s'étendant chacun vers l'extérieur dans la direction axiale du pneumatique depuis l'extrémité de bande de roulement correspondante (Te),
l'extrémité de bande de roulement (Te) se réfère à la position de contact au sol la plus à l'extérieur dans la direction axiale du pneumatique quand une charge normale est appliquée au pneumatique (1) dans l'état normal et que le pneumatique (1) est amené en contact avec une surface au sol plane sous un angle de cambrure de 0°,
le profil de couronne (Pc) est formé par un premier arc circulaire (A1) ayant un premier rayon de courbure (R1) et situé sur un côté où un équateur de pneumatique est présent, et des seconds arcs circulaires (A2) ayant chacun un deuxième rayon de courbure (R2) et situés chacun sur un côté où l'extrémité de bande de roulement correspondante (Te) est présente,
une couche de ceinture (7) est disposée à l'intérieur de la portion formant bande de roulement (2), et
chacune des extrémités de ceinture (7e) situées au niveau de côtés les plus à l'extérieur dans la direction axiale du pneumatique de la couche de ceinture (7) est située à l'extérieur, dans la direction axiale du pneumatique, de l'extrémité de bande de roulement correspondante (Te), et à l'intérieur, dans une direction radiale du pneumatique, du profil d'épaulement correspondant (Ps),
**caractérisé en ce que**
chaque profil d'épaulement (Ps) est formé par une ligne droite, et
le profil de couronne (Pc) et le profil d'épaulement (Ps) sont connectés l'un à l'autre au niveau d'un point de discontinuité.

9. Pneumatique (1) selon l'une quelconque des revendications 6 à 8, dans lequel le point de discontinuité est chanfreiné pour donner une forme d'arc circulaire.

10. Pneumatique (1) selon l'une quelconque des revendications 6 à 9, dans lequel une distance (L) dans la direction axiale du pneumatique entre chaque extrémité de ceinture (7e) et l'extrémité de bande de roulement correspondante (Te) est de 5 à 20 mm.

11. Pneumatique (1) selon l'une quelconque des revendications 1 à 10, dans lequel
la couche de ceinture (7) inclut au moins une nappe de ceinture (9) et des bandes de bord (10) disposées sur des côtés extérieurs dans la direction radiale du pneumatique de la nappe de ceinture (9), et
une extrémité intérieure de bord (10e) au niveau d'un côté intérieur dans la direction axiale du pneumatique de chaque bande de bord (10) est située à l'intérieur, dans la direction axiale du pneumatique, de l'extrémité de bande de roulement correspondante (Te).

12. Pneumatique (1) selon l'une quelconque des revendications 1 à 11, dans lequel
le profil de couronne (Pc) a une première position (P1) au niveau d'un centre de lui-même dans la direction axiale du pneumatique et des deuxièmes positions (P2) au niveau de côtés extérieurs de lui-même dans la direction axiale du pneumatique,
chaque profil d'épaulement (Ps) a la deuxième position correspondante (P2) et une troisième position (P3) qui est présente au niveau d'un côté extérieur dans la direction radiale du pneumatique relativement à l'extrémité de ceinture correspondante (7e), et
un angle (θ2) de 10 à 30° est formé entre une première ligne droite (L1) connectant la première position (P1) et la deuxième position (P2) l'une à l'autre et une seconde ligne droite (L2) connectant la deuxième position (P2) et la troisième position (P3) l'une à l'autre.

13. Pneumatique (1) selon la revendication 12, dans lequel un angle (θ1), par rapport à la direction axiale du pneumatique, de la première ligne droite (L1) connectant la première position (P1) et la deuxième position (P2) l'une à l'autre est de 2 à 4°.

14. Pneumatique (1) selon l'une quelconque des revendications 1 à 13, dans lequel
la couche de ceinture (7) inclut au moins une nappe de ceinture (9), et
une portion, de la nappe de ceinture (9), qui est située au niveau de chacun des côtés extérieurs dans la direction axiale du pneumatique relativement à l'extrémité de bande de roulement correspondante (Te) s'étend de manière à être parallèle à une ligne d'extension imaginaire du deuxième arc circulaire correspondant (A2) du profil de couronne (Pc).

15. Pneumatique (1) selon l'une quelconque des revendications 1 à 14, dans lequel
la couche de ceinture (7) inclut une première nappe de ceinture (9A), une deuxième nappe de ceinture (9B) disposée sur un côté extérieur dans la direction radiale du pneumatique de la première nappe de ceinture (9A), et une troisième nappe de ceinture (C) disposée sur un côté extérieur dans la direction radiale du pneumatique de la deuxième nappe de ceinture (9B), et
une largeur dans la direction axiale du pneumatique de la deuxième nappe de ceinture (9B) est plus petite qu'une largeur dans la direction axiale du pneumatique de chacune de la première nappe de ceinture (9A) et de la troisième nappe de ceinture (9C).
